# FASCICULE DE BREVET EUROPEEN

(11) **EP 1 678 224 B1**
(45) Date de publication et mention de la délivrance du brevet: **03.02.2016**
(21) Numéro de dépôt: 04791710.9
(22) Date de dépôt: 18.10.2004
(51) Int. Cl.: C08F 283/06, C08F 265/06, C09D 151/00, C04B 16/04

(54) **UTILISATION DE POLYM RES DE STRUCTURE "PEIGNE" EN BILLES E T COMPOSITIONS AINSI OBTENUES**
VERWENDUNG VON POLYMEREN DER "KAMM-"STRUKTUR IN PERLFORM UND DERART ERHALTENE ZUSAMMENSETZUNGEN
USE OF COMB-STRUCTURED BEAD-FORM POLYMERS, AND RESULTING COMPOSITIONS

(30) Priorité: 23.10.2003 FR 0312428
(43) Date de publication de la demande: 12.07.2006
(73) Titulaire: SNF SAS, 42160 Andrezieux-Boutheon (FR)
(72) Inventeur: VILLARD, Emmanuel, F-42320 St-Christo-en-Jarez (FR); NARANJO, Horacio, F-42410 Chavanay (FR); LYOT, Pierre, F-42000 saint-Etienne (FR)
(74) Mandataire: Cabinet Laurent & Charras
(86) Numéro de dépôt international: PCT/IB2004/003392
(87) Numéro de publication internationale: WO 2005/040240

(56) Documents cités:
- EP-A- 0 056 627
- EP-A- 0 252 463
- WO-A-00/47533
- DATABASE WPI Section Ch, Week 198324 Derwent Publications Ltd., London, GB; Class A14, AN 1983-57219K XP002246899 & JP 58 074552 A (NIPPON SHOKUBAI KAGAKU KOGYO CO LTD) 6 mai 1983 (1983-05-06) cité dans la demande

## Description

La présente invention concerne le secteur technique des polymères de structure " peigne " utilisés comme plastifiant, superplastifiant, agent réducteur d'eau, agent haut réducteur d'eau, dans des compositions comprenant un liant hydraulique, telles que les bétons, mortiers, laitiers, coulis, plâtres, utilisés également comme dispersants de charges organiques et/ou minérales, comme, par exemple et de façon non limitative, dans des compositions telles que des peintures, des enduits, les compositions détergentes, adoucissantes ou cosmétiques, etc....

Un polymère "peigne" est caractérisé par l'homme de métier lorsque sa structure, similaire à celle d'un peigne, comporte une chaîne principale sur laquelle sont fixées des chaînes latérales qui peuvent être de nature différente et de longueur variable (hydrophiles et/ou hydrophobes, de type éthylène oxyde, propylène oxyde, alkyle, etc..., avec des longueurs de 2 à 500 motifs et de préférence de 5 à 200 motifs dans le cas d'une chaîne pendante de type poly éthylène oxyde, ou une longueur équivalente avec un autre motif).

### L'ART ANTERIEUR

De nombreuses recherches sont menées pour mettre au point de nouveaux dispersants qui permettraient d'améliorer les caractéristiques rhéologiques de compositions à base de charges minérales ou organiques.

Ceci est tout particulièrement vrai dans le cas de la fabrication de béton qui nécessite d'avoir un caractère fluide conditionnant sa facilité de mise en oeuvre, ou une réduction de sa teneur en eau pour améliorer les propriétés physiques du béton durci, ainsi qu'une conservation prolongée de la fluidité initiale du béton.

Le béton est aujourd'hui le matériau de construction par excellence. Le béton standard comprend quatre grandes catégories de constituants. Il s'agit :
- d'une charge minérale qui agit comme liant hydraulique
- de sable, de granulats,
- d'eau
- et des adjuvants éventuels

Pour obtenir les propriétés rhéologiques recherchées, on utilise des polymères dispersants appelés plastifiants, superplastifiants ou agents réducteurs d'eau.

Les plastifiants et superplastifiants peuvent être de différentes natures. On citera, par exemple, des composés tels que des condensats de type polynaphtalène sulfonate ou mélamine sulfonate, ainsi que certains polymères acryliques, méthacryliques, maléiques, allyliques, vinyliques ou autres comportant une chaîne principale sur laquelle sont fixées des chaînes latérales pouvant être de nature et longueur différentes.

Ces chaînes latérales peuvent être de nature hydrophile telles les polyéthylène oxydes, ou de nature hydrophobe telles les chaînes alkyles. Cette dernière catégorie de polymères est connue sous l'appellation de polymères " peignes".
Ils sont, par exemple, décrits dans les brevets JP Sho 58-74552 et EP 0,056,627.

Sous leur forme standard de référence, les (co)polymères par exemple (meth) acryliques ayant une structure peigne sont généralement commercialisés en solution aqueuse avec teneur en matière active variable, de 15 à 60 %.

Des formes solides sont également proposées sur le marché. Elles sont obtenues entre autres par des procédés consistant à isoler la matière active de la solution précédemment citée.

La principale technique alors utilisée est celle du "spray-drying" ou séchage par atomisation ou pulvérisation qui consiste à créer un nuage de fines gouttelettes dans un courant gazeux chaud, pendant une durée contrôlée.

D'autres voies d'obtention de superplastifiants en poudre sont également possibles. On citera par exemple la polymérisation par voie anhydre ou en masse et la précipitation dans un milieu non solvant (tel que l'acétone, le méthanol et autres solvants polaires).
Toutefois, de tels procédés sont peu viables industriellement.

Ces polymères de structure peigne présentent des propriétés intéressantes pour ce qui est de la dispersion de charges dans un milieu donné. Ils permettent, en particulier, de stabiliser les dispersions grâce entre autres à une répulsion stérique des particules entre elles.

Cependant, sous leurs formes commerciales actuelles, liquides ou poudres, ces polymères présentent un certain nombre d'inconvénients importants tels que ceux listés ci-après.

Pour les dispersants peigne sous forme liquide :
- concentration relativement faible : coûts élevés de stockage et transport d'eau
- état non adapté pour des mélanges à sec.

Pour les dispersants peigne sous forme solide actuellement sur le marché et obtenus par les techniques référencées précédemment :
- faible densité : d'où une faible efficacité du conditionnement et des coûts de stockage et transport élevés
- écoulement difficile, problèmes de mottage
- présence de particules très fines au caractère pulvérulent ce qui entraîne des difficultés pour les manipuler avec un risque élevé d'inflammation des poussières
- polymère dégradé lors de l'étape de mise en forme solide (polymères exposés à des conditions trop sévères, en particulier à des températures trop élevées)
- mise en solution trop lente.

Il existe donc un besoin reconnu pour des dispersants de structure peigne ne présentant plus ces inconvénients, ou à un degré bien moindre. A ce jour, aucune solution n'existe malgré l'importance des inconvénients et les recherches effectuées pour y remédier.

### DESCRIPTION DE L'INVENTION

Selon l'invention, il a été trouvé de manière surprenante que l'obtention d'un polymère de structure "peigne" sous forme de billes ou "beads" donnait au polymère un niveau de performances significativement supérieur par rapport aux formes solides commerciales pré-existantes, justifiant ainsi ses intérêts, technique et commercial.

Les (co)polymères selon l'invention sont donc des produits tels que décrits ci-dessus, mais caractérisés en ce qu'ils sont préparés sous forme de "billes" ou " beads ".

Les billes ou " beads" sont des formes bien connues de l'homme de métier spécialiste des (co)polymérisations dans la chimie considérée ici. On rappellera simplement que de manière générale les polymères en billes sont obtenus par des procédés dits en suspension, bien connus de l'homme de métier, qu'il est inutile de préciser ici.

Le (co)polymère de l'invention est notamment caractérisé en ce qu'il présente :
- une densité supérieure à 0.5, de préférence supérieure à 0.7, densité supérieure à la densité des superplastifiants sous forme solide actuellement proposés sur le marché,
- une forme sphérique de " bille " ou " bead " et des caractéristiques physiques telles que : un meilleur écoulement, une meilleure répartition des tailles de particules évitant une teneur élevée en particules très fine, une faible surface spécifique, réduisant la vitesse de reprise en humidité ainsi que le mottage,
lui conférant lors de son utilisation comme agent plastifiant, superplastifiant ou dispersant, une nette amélioration globale des conditions d'utilisation comparativement à celles observées pour les mêmes produits commercialisés sous d'autres formes physiques (par exemple poudre fine obtenue par spray-drying), en particulier une disponibilité (efficacité développée en fonction du temps) très rapide du polymère dans le milieu.

Cette nouvelle forme physique en billes confère au polymère lors de son utilisation comme agent plastifiant, superplastifiant ou dispersant, une nette amélioration des conditions d'utilisation et/ou des performances comparativement à celles observées pour les mêmes produits commercialisés sous d'autres formes physiques.

Rien ne pouvait laisser penser qu'un procédé de polymérisation en suspension conduisant à une forme "billes" permettrait d'obtenir des polymères peignes d'efficacité supérieure aux produits existants sur le marché pour une utilisation en tant que dispersant dans des compositions comprenant des charges organiques et/ou minérales.

Les principaux intérêts des polymères de l'invention se retrouvent au niveau :
* de leur procédé de fabrication :
   - températures peu élevées atteintes dans l'étape de mise sous forme bille et, de fait, pas de dégradation pendant cette étape
   - process permettant une productivité élevée par rapport aux autres procédés "solides" existants
* de leurs caractéristiques physiques :
   - écoulement amélioré, dosage plus facile, produit free-flowing, prévention des colmatages des tuyaux d'écoulement, de transport
   - ou d'injection grâce à l'écoulement amélioré
   - peu de risques d'inflammation (peu de très fines particules)
   - plus forte densité : meilleure optimisation du conditionnement
* et manière surprenante, au niveau de leur utilisation :
   - reprise en humidité plus lente, ce qui réduit les contraintes de stockage
   - vitesse de dissolution plus élevée.

Les compositions de l'invention sont caractérisées en ce qu'elles comprennent des charges organiques et/ou minérales et au moins un polymère de structure " peigne " sous forme de billes utilisé comme agent dispersant et/ou stabilisant.

L'invention concerne également l'utilisation de polymères de structure " peigne " en tant que plastifiant, superplastifiant, agent réducteur d'eau, agent haut réducteur d'eau, dans des compositions comprenant un liant hydraulique, telles que les bétons, mortiers, laitiers, plâtres.

Le nombre des éventuels domaines d'application des polymères de structure " peigne " est littéralement illimité. L'effet dispersant des polymères de structure " peigne " ne se limite pas au seul ciment et béton. De par leurs propriétés physiques, les polymères de l'invention sont des ingrédients intéressants pour toutes compositions requérant de disperser des charges organiques et/ou minérales, comme, par exemple et de façon non limitative, dans des compositions telles que des peintures, des enduits, les compositions cosmétiques, détergentes ou adoucissantes.

### EXEMPLES

### 1/ Préparation des polymères de l'invention

Le procédé de préparation sous forme de billes de polymères par suspension inverse est connu depuis la fin des années 50.

Ce procédé nécessite 4 étapes industrielles (polymérisation, distillation, séparation liquide/solide, séchage), au lieu d'une seule nécessaire à l'obtention d'un polymère liquide.

Les polymères " peignes " sous forme de billes sont obtenus par dispersion d'une phase aqueuse dans une phase hydrophobe. L'eau est ensuite enlevée par distillation. Le polymère sec est ensuite filtré et séché.

Le milieu de dispersion (phase hydrophobe) est constitué d'un solvant insoluble dans la phase aqueuse et d'un agent stabilisant. On peut utiliser la plupart des stabilisants connus des suspensions inverses (par exemples ceux décrits par les brevets US 2,982,749, US 4,158,726, GB 1482515 et GB 1329062).

Cette phase hydrophobe est dégazée 30 minutes à l'azote sous agitation (200 rpm), étape seulement nécessaire dans le cas d'une polymérisation en suspension. La phase aqueuse de monomère(s) ou polymère(s) est ensuite dispersée dans la phase hydrophobe.

Dans le cas d'une polymérisation en suspension, l'initiateur de polymérisation pourra être, de façon conventionnelle, soit de type azoïque ou similaire (c'est-à-dire résultant d'une dégradation thermique), soit de type oxydo/réducteur, soit de type photo-initiateur ; il peut également consister en une combinaison de ces 2 types d'amorceurs.

Il est également possible d'ajouter à la phase aqueuse de monomère(s) ou polymère(s) d'autres composés, organiques ou minéraux, solubles ou dispersibles dans la phase aqueuse avant dispersion de cette même phase aqueuse dans la phase hydrophobe. Ces composés peuvent être entre autres :
- des agents antimousses, ester phosphoriques, polymères silicones, alcools alkoxylés, etc...
- des agents retardateurs ou accélérateurs de prise,
- des agents modifiants la texture, la taille de la bille
- des charges de tout type : craie, bentonite, dioxyde de titane, cendres volantes, silicate d'aluminium, talc, chaux, gypse, kaolin, sulfate de baryum, etc...
- etc...

Les billes obtenues sont séparées de la phase hydrophobe par filtration sur tamis avec ou sans étape préalable de déshydratation. Les billes sont ensuite nettoyées de leurs restes de phase hydrophobe par une étape ultime de séchage.

Les billes ainsi obtenues sont de forme sphérique de diamètre compris entre 50 µm et 1000 µm avec une distribution classiquement centrée entre 100 et 500 µm.

L'homme de métier saura choisir la meilleure combinaison en fonction de ses connaissances propres et de la présente description.

### 2/ Tests comparatifs

### 2a/ Test d'écoulement

Les polymères PBa et PBb ont été préparés selon la technique telle que décrite précédemment et dite de suspension inverse.
PBa : polymère peigne de l'invention (méthacrylate de methoxy polyethylene glycol / acide acrylique) obtenu sous forme de billes par le procédé tel que décrit précédement de suspension inverse. PBb : polymère peigne de l'invention (polyethylene glycol mono allyl ether / acide maléique) obtenu sous forme de billes par le procédé tel que décrit précédemment de suspension inverse.

Les polymères P1, P2 et P3 sont utilisés comme exemples comparatifs.
P1 : polymère peigne (méthacrylate de methoxy polyethylene glycol / acide acrylique) obtenu sous forme de solution aqueuse, tel que décrit dans l'exemple 1 du brevet Sho 58-74552.
P2 : polymère peigne (polyéthylène glycol mono allyl ether / acide maléique) obtenu sous forme de solution aqueuse, tel que décrit dans l'exemple 1 du brevet EP 0,056,627.
Les polymères 1, 2 sont en solution respectivement à des concentrations de 40 et 48 %. Le pH est ajusté à 6
P1 SD : polymère P1 obtenu sous forme de poudre par la technique du "spray-drying".
P2SD : polymère P2 obtenu sous forme de poudre par la technique du "spray-drying".

La chimie et la structure chimique des polymères PBa et PBb correspondent respectivement à celle des polymères P1 et P2.

### Description de la mesure d'écoulement :

Cette mesure est déterminée en mesurant le temps d'écoulement de 50g de poudre dans un entonnoir en inox ayant les dimensions suivantes : hauteur 15 cm, diamètre supérieur 11,5 cm, diamètre inférieur 1 cm.

| Polymère | Aspect | Écoulement | Divers |
|---|---|---|---|
| P1SD da : **0,45** | poudre de couleur beige | ne s'écoule pas librement | poudre collante |
| P2SD da : **0,43** | poudre de couleur beige | ne s'écoule pas librement | poudre collante |
| PBa (invention) da **:0,72** | billes de couleur beige | 6 secondes | taille de particules moyenne de 100 microns |
| PBb (invention) da : **0,70** | billes de couleur beige | 7 secondes | taille de particules moyenne de 200 microns |

| | | | |
|---|---|---|---|
| (da = densité apparente, obtenue par la mesure de la masse de polymères contenue dans une éprouvette de 100ml après tassement par 10 secousses identiques.) | | | |

On constate que seuls les polymères de l'invention (i.e. : PBa et PBb), obtenus sous forme de billes, s'écoulent librement.

### 2b/ Test d'efficacité

Cet essai a pour but de comparer les qualités dispersantes des polymères peignes en relation avec leur forme physique (poudre spray dryée, billes et liquide).

Pour conférer à ces essais une valeur probante, ceux-ci ont été effectués sur une composition représentative (forte proportion en charges minérales) et selon une procédure normative EN 480-1, formulation de mortier ISO, sur laquelle le temps de malaxage nécessaire pour obtenir une efficacité optimale a servi de variable.

### a- Matières premières

| | |
|---|---|
| Ø sable normalisé NF EN 196-1 | Ø CPA 52.5 PM (Vicat) ciment |

### b- Composition du mortier

| | | | |
|---|---|---|---|
| CIMENT (C) | 450 g | T°C eau | = 21 °C |
| SABLE (S) | 1350 g | T°C lab | = 20 ° C |
| EAU (E) | 250 g | T°C mortier | = 20 °C |
| Superplastifiant | 0,22 % en sec / ciment | | |
| soit 1 g | | | |

### Descriptif de la mesure d'étalement :

L'étalement est mesuré sur une plaque en inox (30 x 30 cm). La valeur est obtenue après remplissage d'un cône (12 x 8 cm) par le mortier qui est ensuite posé sur la plaque et retiré. À l'aide d'une règle, on mesure alors à 3 endroits différents la valeur moyenne du diamètre de la galette formée : plus l'étalement est élevé, plus le polymère est efficace.

| Superplastifiant | Étalement avec un temps de malaxage selon la norme EN 480-1 (en mm) | Étalement avec un temps de malaxage divisé par 2 par rapport à la norme EN 480-1 (en mm) | Étalement avec un temps de malaxage divisé par 4 par rapport à la norme EN 480-1 (en mm) |
|---|---|---|---|
| Blanc sans polymère | 120 | 120 | 120 |
| P1 (liquide) | 305 | 305 | 305 |
| P2 (liquide) | 250 | 250 | 250 |
| P1 SD (spray dryé) | 275 | 270 | 260 |
| P2 SD (spray dryé) | 230 | 210 | 200 |
| PBa (invention) | 305 | 305 | 305 |
| PBb (invention) | 250 | 250 | 250 |

Les résultats présentés ci-dessus démontrent, de façon inattendue et surprenante, et contrairement à l'autre forme solide commercialement disponible, c'est-à-dire obtenues par la technique de spray drayage, que :
- les polymères de l'invention conservent une efficacité non altérée par rapport au polymère sous forme liquide
- même avec un temps de malaxage très court par rapport à la normale (c'est-à-dire ce que préconise la norme EN 480-1), les polymères de l'invention obtenue sous forme de billes présentent une efficacité maximum.

## Revendications

1. Compositions comprenant des charges organiques et/ou minérales et au moins un (co)polymère de type dispersant, de structure peigne **caractérisé en ce que** le polymère peigne est obtenu sous forme de billes ou " beads ", et **en ce que** le polymère peigne comporte une chaîne principale sur laquelle sont fixées des chaînes latérales présentant des motifs de nature hydrophile et/ou hydrophobe de type éthylène oxyde et/ou propylène oxyde et/ou alkyle avec des longueurs de 2 à 500 motifs.

2. Compositions selon la revendication 1 **caractérisées en ce que** le polymère peigne comporte une chaîne principale sur laquelle sont fixées des chaînes latérales présentant des motifs de nature hydrophile et/ou hydrophobe avec des longueurs de 5 à 200 motifs.

3. Compositions selon l'une quelconque des revendications 1 à 2 **caractérisées en ce que** le polymère peigne est un polymère partiellement à base de (méth)acrylate de methoxy polyéthylène glycol et/ou de polyéthylène glycol mono allyl ether.

4. Compositions selon l'une quelconque des revendications 1 à 3 **caractérisées en ce que** le polymère peigne est un copolymère à base de (méth)acrylate de methoxy polyéthylène glycol et/ou polyéthylène glycol mono allyl ether et d'acide acrylique et/ou d'acide méthacrylique et/ou d'acide maléique et/ou de leurs sels.

5. Compositions selon l'une quelconque des revendications 1 à 4 **caractérisées en ce que** le polymère peigne est obtenu sous forme de billes ayant une densité apparente supérieure à 0.5, de préférence supérieure à 0.7.

6. Utilisation de polymères de structure peigne sous forme de billes en tant que qu'agent plastifiant, superplastifiant, agent réducteur d'eau, agent haut réducteur d'eau, dans des compositions comprenant un liant hydraulique, telles que les bétons, mortiers, laitiers, coulis, plâtres.

7. Utilisation de polymères de structure peigne sous forme de billes en tant que dispersants de charges organiques et/ou minérales, dans des compositions telles que des peintures, des enduits, les compositions détergentes, adoucissantes ou cosmétiques.

8. Utilisation de polymères de structure peigne sous forme de billes selon les revendications 6 à 7 **caractérisée en ce que** le polymère peigne comporte une chaîne principale sur laquelle sont fixées des chaînes latérales comportant des motifs de nature hydrophile et/ou hydrophobe de type éthylène oxyde et/ou propylène oxyde et/ou alkyl avec des longueurs de 2 à 500 motifs.

## Patentansprüche

1. Zusammensetzungen, umfassend organische und/oder mineralische Füllstoffe und mindestens ein (Co)polymer des Typs Dispergiermittel mit Kammstruktur, **dadurch gekennzeichnet, dass** das Kammpolymer in Form von Kügelchen oder "beads" gewonnen wird, und dass das Kammpolymer eine Hauptkette umfasst, an der Seitenketten fixiert sind, die Einheiten hydrophiler und/oder hydrophober Beschaffenheit des Typs Ethylenoxid und/oder Propylenoxid und/oder Alkyl mit Längen von 2 bis 500 Einheiten aufweisen.

2. Zusammensetzungen nach Anspruch 1, **dadurch gekennzeichnet, dass** das Kammpolymer eine Hauptkette umfasst, an der Seitenketten fixiert sind, die Einheiten hydrophiler und/oder hydrophober Beschaffenheit mit Längen von 5 bis 200 Einheiten aufweisen.

3. Zusammensetzungen nach einem der Ansprüche 1 bis 2, **dadurch gekennzeichnet, dass** das Kammpolymer ein Polymer ist, das teilweise auf Basis von Methoxypolyethylenglycol- und oder Polyethylenglycolmonoallylether-(meth)acrylat vorliegt.

4. Zusammensetzungen nach einem der Ansprüche 1 bis 3, **dadurch gekennzeichnet, dass** das Kammpolymer ein Copolymer auf Basis von Methoxypolyethylenglycol- und/oder Polyethylenglycolmonoallyl-(meth)acrylat und Acrylsäure und/oder Methacrylsäure und/oder Maleinsäure und/oder deren Salzen ist.

5. Zusammensetzungen nach einem der Ansprüche 1 bis 4, **dadurch gekennzeichnet, dass** das Kammpolymer in Form von Kügelchen mit einer Schüttdichte (franz. densite apparente, scheinbare Dichte) von über 0,5, vorzugsweise über 0,7 gewonnen wird.

6. Verwendung von Polymeren mit Kammstruktur in Form von Kügelchen als Plastifizierungsmittel, Superplastifizierungsmittel, Wasserreduktionsmittel, starkes Wasserreduktionsmittel in Zusammensetzungen, die ein hydraulisches Bindemittel umfassen wie etwa Beton, Mörtel, Schlacke, Vergießmasse, Gips.

7. Verwendung von Polymeren mit Kammstruktur in Form von Kügelchen als Dispergiermittel von organischen und/oder mineralischen Füllstoffen in Zusammensetzungen wie etwa Anstrichfarben, Putzen, waschaktiven, weichspülenden oder kosmetischen Zusammensetzungen.

8. Verwendung von Polymeren mit Kammstruktur in Form von Kügelchen nach den Ansprüchen 6 bis 7, **dadurch gekennzeichnet, dass** das Kammpolymer eine Hauptkette umfasst, an der Seitenketten fixiert sind, die Einheiten hydrophiler und/oder hydrophober Beschaffenheit des Typs Ethylenoxid und/oder Propylenoxid und/oder Alkyl mit Längen von 2 bis 500 Einheiten aufweisen.

## Claims

1. Compositions incorporating organic and/or mineral charges and at least one (co)polymer of dispersant type, of comb structure, **characterized by** the fact that the comb polymer is obtained in bead form, and by the fact that the comb polymer includes a principal chain to which lateral chains are fixed with patterns of hydrophilic and/or hydrophobic nature, such as ethylene oxide and/or polypropylene oxide and/or alkyl, with lengths from 2 to 500 patterns.

2. Compositions in accordance with claim 1, **characterized by** the fact that the comb polymer incorporates a principal chain on which lateral chains are fixed with patterns of hydrophilic and/or hydrophobic nature, with lengths from 5 to 200 patterns.

3. Compositions in accordance with either of claims 1 or 2, **characterized by** the fact that the comb polymer is a polymer partially based on (meth)acrylate of methoxy polyethylene glycol and/or polyethylene glycol mono allyl ether.

4. Compositions in accordance with any one of claims 1 to 3, **characterized by** the fact that the comb polymer is a copolymer based on (meth)acrylate of methoxy polyethylene glycol and/or polyethylene glycol mono allyl ether and acrylic acid and/or methacrylic acid and/or maleic acid and/or their salts.

5. Compositions in accordance with any one of claims 1 to 4, **characterized by** the fact that the comb polymer is obtained in the form of beads having an apparent density greater than 0.5, and preferably greater than 0.7.

6. Use of polymers of comb structure in the form of beads as a plastifying agent, superplastifying agent, water reduction agent, or high water reduction agent, in compositions including a hydraulic binder such as concretes, mortars, slags, slurries and plasters.

7. Use of polymers of comb structure in the form of beads as dispersants of organic and/or mineral charges, in compositions such as paints, renderings, detergent compositions, softeners or cosmetics.

8. Use of polymers of comb structure in the form of beads in accordance with claims 6 or 7, **characterized by** the fact that the comb polymer includes a principal chain on which lateral chains are fixed with patterns of hydrophilic and/or hydrophobic nature, such as ethylene oxide and/or propylene oxide and/or alkyl, with lengths from 2 to 500 patterns.
